Europäisches Patentamt

European Patent Office

Office européen des brevets

(19)

(11) Numéro de publication : **0 029 754
B2**

(12) **NOUVEAU FASCICULE DE BREVET EUROPÉEN**

(45) Date de publication du nouveau fascicule du brevet :
11.02.87

(51) Int. Cl.⁴ : **B 01 D   1/06, F 28 D   3/04**

(21) Numéro de dépôt : 80401435.5

(22) Date de dépôt : 08.10.80

(54) **Evaporateur à flot descendant.**

(30) Priorité : 23.11.79 FR 7928881

(43) Date de publication de la demande :
03.06.81 Bulletin 81/22

(45) Mention de la délivrance du brevet :
08.12.82 Bulletin 82/49

(45) Mention de la décision concernant l'opposition :
11.02.87 Bulletin 87/07

(84) Etats contractants désignés :
**AT BE DE GB IT NL**

(56) Documents cités :
**BE-A-   674 546
CH-A-   255 957
FR-A- 1 474 283
FR-A- 2 347 072
US-A- 2 016 341
US-A- 2 424 441
US-A- 2 753 932
US-A- 3 995 663
dessin Z.Nr. 31 568-0/f de la Société Samesreuther
Müller Schuss GmbH du 11.2.1969
Revue "Chemie-Ingenieur-Technik", Nr. 47- 1975, Nr.
23, page 966
Prospectus de la Société Wiegand, 7505 Ettlingen -
1973
Chemische Betriebstechnik - W. Wittenberger - 3e
edition, 1974, pages 293-295**

(73) Titulaire : **FIVES-CAIL BABCOCK, Société anonyme
7 rue Montalivet
F-75383 Paris Cedex 08 (FR)**

(72) Inventeur : **Longuet, André
171, rue Faidherbe
F-62400 Bethune (FR)**

(74) Mandataire : **Fontanié, Etienne
FIVES-CAIL BABCOCK 7, rue Montalivet
F-75383 Paris Cedex 08 (FR)**

EP 0 029 754 B2

### Description

La présente invention concerne les évaporateurs à flot descendant utilisés, en particulier, pour la concentration par évaporation de liquides sensibles à la chaleur, par exemple des jus sucrés, et dans lesquels le liquide à concentrer s'écoule en couche mince sur la surface intérieure des tubes verticaux d'un faisceau chauffés extérieurement par de la vapeur.

Dans les appareils de ce type, il est essentiel que le liquide à concentrer soit réparti uniformément entre tous les tubes du faisceau. C'est pourquoi de nombreux dispositifs de répartition du liquide ont été étudiés et proposés. Les dispositifs connus comportant soit une plaque perforée disposée au-dessus de la plaque tubulaire du faisceau, soit des déflecteurs placés à l'entrée des tubes pour réduire à une faible valeur la section de passage offerte au liquide. Ces dispositifs ne sont plus efficaces lorsque le liquide contient des solides en suspension car ceux-ci obstruent rapidement les trous de la plaque ou les passages à section réduite à l'entrée des tubes. Il en est de même lorsqu'on traite des produits incrustants car il se forme sur les bords des trous ou des déflecteurs des dépôts qui créent des passages préférentiels et rendent ces dispositifs inefficaces.

Par ailleurs, il est nécessaire, pour un bon fonctionnement de l'évaporateur, que le débit de liquide s'écoulant dans chaque tube soit compris entre deux limites correspondant à un mouillage optimal du tube. Généralement, le débit d'alimentation est insuffisant et une solution classique consiste à effectuer un recyclage du produit sortant. Cette solution présente deux inconvénients : elle provoque une dispersion importante des temps de séjour des diverses fractions du produit dans l'évaporateur avec des conséquences néfastes sur la qualité de certains produits sensibles à la chaleur et une diminution du coefficient d'échange thermique du fait de l'élévation de la concentration du produit en circulation qui est proche de la concentration de sortie.

Le but de la présente invention est d'améliorer les performances des évaporateurs de ce type en réalisant une meilleure répartition du liquide entre tous les tubes et en augmentant, sans recyclage, le débit de liquide s'écoulant dans chaque tube de façon à obtenir un mouillage optimal du tube.

Suivant une première caractéristique de l'invention, on utilise en combinaison avec un dispositif de répartition du liquide sur la plaque tubulaire supérieure des chapeaux placés au-dessus des tubes, à l'écart de leur extrémité supérieure, pour empêcher le liquide de tomber dans la partie centrale des tubes.

Les chapeaux sont montés à l'extrémité supérieure de pièces dont la partie inférieure est introduite dans les tubes du faisceau et dont la section est faible par rapport à la section interne des tubes. La partie supérieure desdites pièces peut reposer sur l'extrémité des tubes ou sur la plaque tubulaire. Ces pièces peuvent être constituées par des profilés à trois ailes ou plus, au moins une des ailes ou plus, au moins une des ailes comportant dans sa partie supérieure un épaulement par l'intermédiaire duquel la pièce repose sur l'extrémité du tube ou sur la plaque tubulaire. A leur extrémité inférieure, les ailes sont taillées en biseau de manière que leurs bords libres se prolongent vers le bas au-delà de la partie centrale du profilé. La face supérieure du chapeau peut être munie de rainures radiales régulièrement disposées autour de son centre pour réaliser une répartition uniforme du liquide sur toute sa périphérie. Les profilés et les chapeaux peuvent être assemblés, par collage ou soudage, ou réalisés en une seule pièce par moulage ; ils peuvent être en métal ou en matière plastique.

Le dispositif de répartition sera avantageusement formé d'au moins une nappe de barres horizontales, écartées les unes des autres, chaque barre étant disposée au-dessus d'une rangée de tubes du faisceau. Plusieurs nappes de barres superposées peuvent être prévues avec des orientations différentes pour les barres, au moins celles de la nappe inférieure étant disposées comme indiqué ci-dessus.

Ces barres peuvent être constituées par des tubes ou par des cornières disposées avec l'arête vers le haut.

Selon une autre caractéristique de l'invention, les espaces au-dessus de la plaque tubulaire supérieure et au-dessous de la plaque tubulaire inférieure sont divisés par des cloisons radiales, chaque cloison inférieure se trouvant dans un même plan vertical qu'une cloison supérieure, de façon à former dans l'évaporateur plusieurs sections pouvant fonctionner indépendamment l'une de l'autre, et chaque section comporte son propre dispositif de répartition constitué comme décrit ci-dessus. Avantageusement, les cloisons seront parallèles aux directions d'alignement des tubes du faisceau et les barres des différentes nappes seront parallèles aux cloisons. Selon un mode de réalisation préféré, les barres des dispositifs de répartition des différentes sections sont supportées par une virole cylindrique reposant sur la plaque tubulaire supérieure et par les cloisons qui sont fixées à ladite virole et à un pilier central, cet ensemble constituant une unité amovible et remplaçable.

De préférence, la tubulure d'alimentation de chaque section comporte plusieurs branches, et plusieurs déflecteurs coniques, espacés verticalement les uns des autres et percés d'une ouverture en leur centre sont disposés sous chaque branche, le diamètre extérieur et le diamètre de l'ouverture centrale de chaque déflecteur diminuant du déflecteur supérieur au déflecteur inférieur.

Un séparateur à action centrifuge peut être placé dans la calandre constituant la partie inférieure de l'évaporateur pour séparer les gouttelettes de liquide de la vapeur produite. Ce séparateur peut être formé de deux viroles concentriques délimitant le long de la paroi de la calandre deux passages circulaires concentriques ayant une étendue angulaire supérieure à 270°, le passage intérieur communiquant avec l'espace central de la calandre par au moins une ouverture percée dans la virole intérieure et débouchant à une extrémité du passage extérieur et une tuyauterie de sortie de vapeur étant raccordée à l'autre extrémité du passage extérieur.

La description qui suit se réfère aux dessins l'accompagnant qui montrent, à titre d'exemple non limitatif, un mode de réalisation de l'invention et sur lesquels :

La figure 1 est une coupe verticale d'un évaporateur réalisé conformément à l'invention ;

la figure 2 est une vue de dessus, sans couvercle, de l'évaporateur de la figure 1, certains éléments du dispositif de répartition de liquide n'ayant pas été représentés pour rendre la figure plus claire ;

la figure 3 est une coupe suivant C-C de l'évaporateur de la figure 1 ;

la figure 4 est une vue en élévation de l'une des pièces placées dans la partie supérieure des tubes de l'évaporateur, le tube et la plaque tubulaire étant représentés en coupe ;

la figure 5 est une vue de dessus de la pièce représentée sur la figure 4 ;

la figure 6 est une vue en élévation d'une pièce pouvant être introduite dans la partie supérieure des tubes de l'évaporateur, à la place de la pièce de la figure 4 ; et

la figure 7 est une vue suivant F de la pièce de la figure 6.

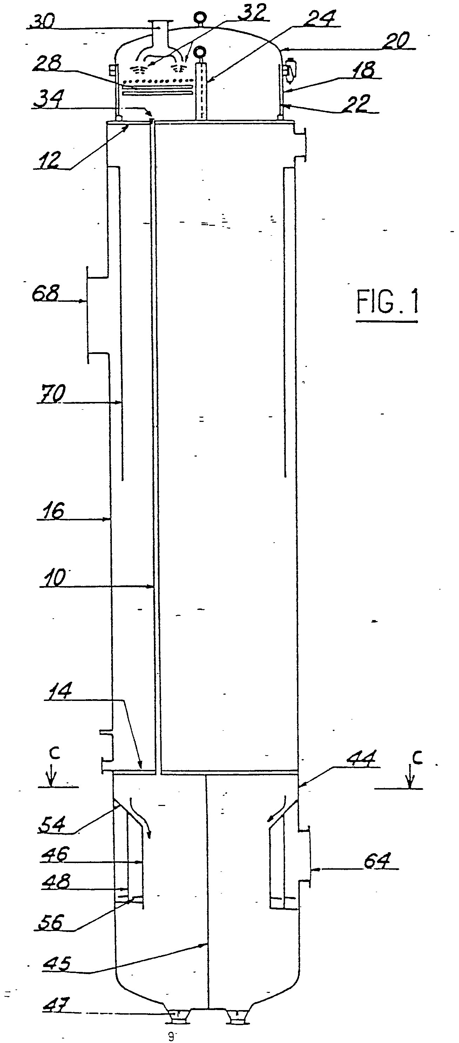

L'évaporateur représenté sur les figures 1 à 3 est constitué par un faisceau de tubes verticaux 10 dont les extrémités sont fixées dans des trous de deux plaques tubulaires 12 et 14 et une enveloppe 16 entourant le faisceau de tubes est fixée de manière étanche sur les bords des plaques tubulaires pour former avec celles-ci une chambre de vapeur. Le faisceau comporte un grand nombre de tubes espacés les uns des autres et disposés de telle sorte qu'ils soient alignés suivant trois directions à 120° ; un seul tube a été représenté sur la figure 1 pour que celle-ci soit plus claire.

Sur la plaque tubulaire supérieure 12 est soudée une virole cylindrique 18 dont le bord supérieur est muni d'une bride sur laquelle est fixé, au moyen de vis ou de boulons, un couvercle 20. Un dispositif de répartition du liquide est placé à l'intérieur de l'espace délimité par la plaque tubulaire 12, la virole 18 et le couvercle 20 ; il comporte un châssis reposant sur la plaque tubulaire 12 et constitué par une virole 22 dont le diamètre est légèrement inférieur à celui de la virole 18, un pilier central 24 et trois cloisons radiales 26 reliant le pilier et la virole et faisant entre elles des angles de 120°. Ce châssis est disposé de telle sorte que les trois cloisons soient parallèles aux trois directions d'alignement des tubes 10. Le pilier 24 porte un anneau permettant le démontage du dispositif, pour nettoyage ou réparation, au moyen d'un appareil de levage, et éventuellement son remplacement par un dispositif de secours.

Les cloisons délimitent, à l'intérieur de la virole 22, trois compartiments identiques comportant le même équipement. Cet équipement est constitué par trois nappes superposées de tubes horizontaux 28. Dans chaque nappe, les tubes 28 sont parallèles entre eux et écartés les uns des autres, et chaque tube 28 de la nappe inférieure au moins est disposé exactement au-dessus d'une rangée de tubes 10, les orientations des tubes des trois nappes étant différentes.

Les tubes 28 sont supportés par des fers plats percés de trous qui sont fixés sur la virole 22 et les cloisons 26 de telle sorte que les nappes soient verticalement espacées. A la place des tubes, on pourrait utiliser des barres ayant une section appropriée ; on pourrait notamment utiliser des cornières disposées avec leur arête vers le haut.

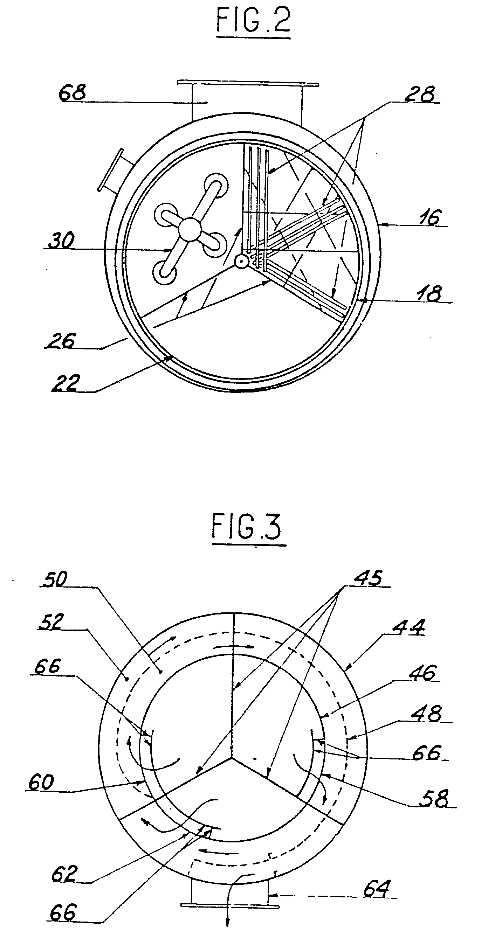

Sur la figure 1, on a représenté les tubes 28 d'un seul compartiment et sur la figure 2 on n'a montré qu'une partie des tubes 28 équipant l'un des compartiments, l'équipement des deux autres compartiments n'ayant pas été représenté.

Pour chaque compartiment, on a prévu une tubulure d'alimentation à quatre branches 30 portée par le couvercle 20 ; une seule tubulure a été représentée sur les figures 1 et 2 pour rendre le dessin plus clair. Chaque section de l'évaporation délimitée par les trois plans verticaux contenant les cloisons 26 peut ainsi être alimentée séparément. Sous chaque branche de la tubulure 30 on a placé une série de déflecteurs coniques 32 superposés et percés d'une ouverture centrale, le diamètre des déflecteurs et de l'ouverture centrale diminuant du déflecteur supérieur au déflecteur inférieur. Les déflecteurs 32 permettent de distribuer le liquide sur les tubes de la nappe supérieure. Par capillarité, le liquide s'étale sur toute la longueur des tubes puis tombe sur les tubes de la nappe intermédiaire où le même phénomène se reproduit ; il tombe ensuite sur les tubes de la nappe inférieure et enfin sur la plaque tubulaire. Etant donné qu'au dessus de chaque rangée de tubes 10 et sur toute sa longueur se trouve un tube 28, le liquide sera réparti sur toute la plaque tubulaire, entre les rangées de tubes. Il faut noter que seule la disposition des tubes 28 de la nappe inférieure parallèlement aux rangées de tubes 10 et au-dessus de celles-ci est importante ; les autres nappes n'ont pour but que de distribuer le liquide sur les tubes de la nappe inférieure et leurs tubes pourraient être orientés différemment. On pourrait aussi ne prévoir que deux nappes ou ne conserver que la nappe inférieure si le dispositif de distribution associé aux tubulures d'alimentation est assez efficace.

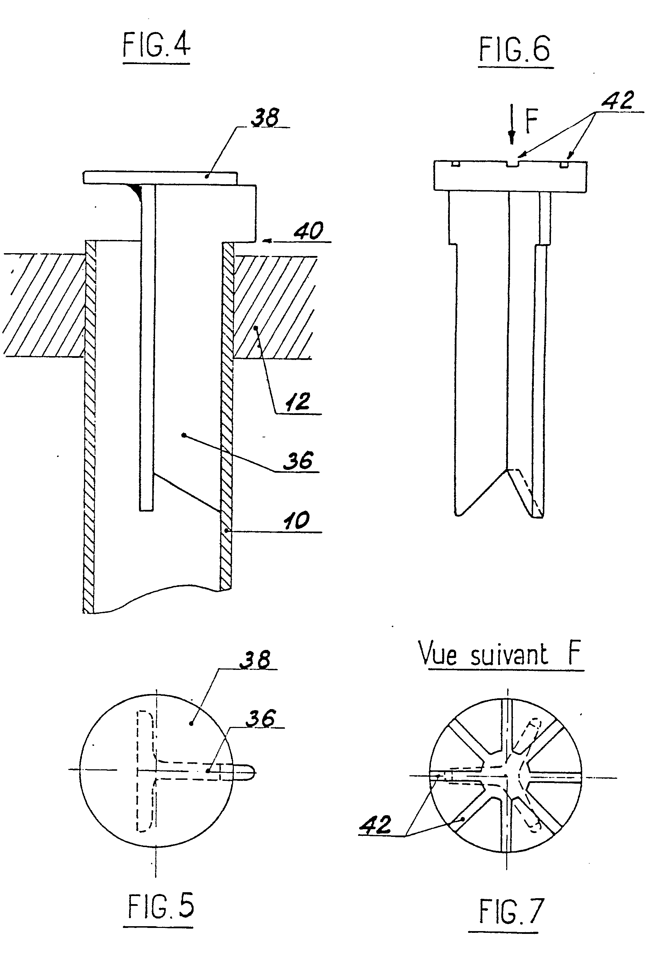

Bien que les tubes 28 de la nappe inférieure soient disposés au-dessus des rangées de tubes 10, il pourrait arriver que des fillets liquides tombent dans la partie centrale de ces derniers, ce qu'il faut éviter. Pour cela, on a disposé dans chaque tube, à son extrémité supérieure, une pièce 34 munie d'un chapeau qui protège l'entrée du tube. Dans le mode de réalisation des figures 4 et 5, cette pièce est constituée par un profilé à section en T36 sur lequel le chapeau 38 est fixé par des points de soudure. Une aile du profilé est découpée de façon à former, à son extrémité supérieure, un épaulement 40 par lequel la pièce repose sur l'extrémité du tube. La pièce pourrait également reposer sur la plaque tubulaire si le tube affleurait la face supérieure de la plaque. Les 3 ailes du profilé sont taillées en biseau, à leur extrémité inférieure, comme montré sur la figure 4, de telle sorte que le liquide s'écoulant sur ces ailes soit dirigé vers la surface intérieure du tube. Dans ce mode de réalisation, le chapeau 38 est plat et a un diamètre approximativement égal au diamètre extérieur du tube 10 ; il pourrait être bombé et avoir un diamètre légèrement supérieur à celui du tube.

Les figures 6 et 7 montrent une autre forme de réalisation d'une pièce 34. Cette pièce est réalisée en matière plastique moulée ; elle comporte trois ailes disposées à 120° et des rainures radiales 42 sont prévues sur la face supérieure du chapeau pour assurer une meilleure répartition, sur toute sa périphérie, du liquide qu'il reçoit.

Etant donné que les chapeaux sont nettement écartés de l'extrémité des tubes 10 et que la section de la partie des pièces introduites dans les tubes est faible par rapport à la section des tubes, il n'y a pas de risque d'obstruction de l'entrée des tubes par les impuretés que peut contenir le liquide à concentrer.

Une calandre 44 est fixée sous la plaque tubulaire inférieure 14. Elle est divisée en trois compartiments par des cloisons 45 disposées à 120° dans les mêmes plans verticaux que les cloisons 26 ; chaque compartiment comporte à sa base un orifice de sortie 47.

Un dispositif de séparation des gouttelettes entraînées par la vapeur est disposé sous la plaque tubulaire 14, dans la calandre 44. Ce dispositif est constitué par deux viroles 46 et 48 délimitant entre elles et avec la paroi de la calandre deux passages circulaires 50 et 52 concentriques dont l'étendue angulaire est comprise entre 270° et 360°. Ces deux passages sont fermés à leur partie supérieure par un toit annulaire incliné 54 et à leur base par un système de chicanes 56 permettant l'écoulement vers l'intérieur de la calandre du liquide séparé recueilli dans les passages 50 et 52.

Deux des compartiments délimités par les cloisons 26 communiquent avec le passage intérieur 50 par des ouvertures de grande section 58 et 60 prévues dans la virole 46. La vapeur produite dans les sections de l'évaporateur correspondant à ces compartiments pénètre dans le passage 50 à travers ces ouvertures et s'écoule, comme indiqué par les flèches sur la figure 3, jusqu'à l'entrée du passage 52 où elle se mélange à la vapeur provenant du troisième compartiment à travers une ouverture 62 de la virole 46. Le débit total de vapeur s'écoule alors dans le passage extérieur 52, jusqu'à l'orifice de sortie de vapeur 64. Pendant le trajet de la vapeur dans les passages 50 et 52, les gouttelettes de liquide sont séparées de la vapeur par la force centrifuge et se déposent respectivement sur la virole 48 et sur la paroi 44 de la calandre d'où elles s'écoulent vers le bas, par gravité, jusque dans la calandre, à travers les chicanes 56.

Le bord supérieur des ouvertures 58, 60 et 62 et leur côté vertical opposé à la cloison 45 adjacente sont bordés par des gouttières 66 qui dévient le liquide tombant du toit 54 et évitent la formation, devant les ouvertures, d'un rideau de liquide que la vapeur devrait traverser.

Les trois sections de l'évaporateur sont reliées en série et traversées successivement par le liquide à concentrer ; les liaisons entre les différentes sections sont réalisées par des moyens classiques, par exemple au moyen de pompes centrifuges. Cette solution permet, pour un débit donné de liquide, d'obtenir un meilleur mouillage des tubes 10, sans avoir à effectuer une recirculation et d'avoir ainsi un temps de séjour pratiquement identique toute particule du liquide. On obtient dans chaque section de l'évaporateur une concentration moyenne du liquide à concentrer plus faible que celle rencontrée dans un appareil fonctionnant avec recirculation d'où il résulte une amélioration du coefficient d'échange thermique de chaque section et par conséquent, de l'évaporateur, une diminution des colorations et une atténuation sensible des détériorations dans le cas de produits thermosensibles.

La vapeur de chauffage est introduite dans la chambre de vapeur par l'orifice 68 ; en se condensant elle cède de la chaleur au liquide s'écoulant sur la surface intérieure des tubes 10. La vapeur est efficacement répartie sur toute la section du faisceau de tubes par une virole intérieure 70 qui assure de plus la protection des tubes 10 placés en face de l'orifice 68. Des sorties d'eau condensée et d'incondensables lourds sont prévues à la partie inférieure de l'enveloppe 16. Des sorties de vapeur sont prévues à la partie supérieure de l'enveloppe pour le cas où on veut réaliser un balayage du faisceau en admettant de la vapeur en excès ; ce balayage permet d'éliminer les incondensables légers.

Le liquide et la vapeur produite s'écoulent de haut en bas le long des tubes 10 jusque dans la calandre 44 ; le liquide tombe au fond de la calandre, dans un des compartiments, d'où il est extrait par une pompe pour être renvoyé dans la section suivante de l'évaporateur ou à un autre stade de fabrication tandis que la vapeur traverse le dispositif de séparation et est évacuée par l'orifice 64.

Bien que l'évaporateur décrit ci-dessus comporte trois sections reliées en série, ce nombre n'est évidemment pas limitatif et est choisi, dans chaque cas, pour obtenir un mouillage optimal des tubes. Si le débit d'alimentation est suffisant, l'évaporateur sera utilisé de façon classique avec passage unique du produit à concentrer.

De nombreuses modifications, dont certaines ont été exposées ci-dessus, peuvent être apportées au mode de réalisation décrit et par l'emploi de moyens techniques équivalents, il est bien entendu qu'elles entrent toutes dans le cadre de l'invention.

**Revendications**

1. Evaporateur à flot descendant comportant un faisceau de tubes verticaux dont les extrémités sont fixées à des plaques tubulaires supérieure et inférieure, et un dispositif (28) de répartition du liquide sur la plaque tubulaire supérieure (12), caractérisé en ce qu'il comporte des chapeaux (38) placés au-dessus des tubes (10) du faisceau, nettement à l'écart de leur extrémité supérieure, lesdits chapeaux étant montés à l'extrémité supérieure de pièces (36) dont la partie inférieure est introduite dans les tubes du faisceau et dont la section est faible par rapport à la section interne des tubes.

2. Evaporateur selon la revendication 1, caractérisé en ce que la partie supérieure desdites pièces (36) repose sur l'extrémité des tubes (10) ou sur la plaque tubulaire supérieure (12).

3. Evaporateur selon la revendication 2, caractérisé en ce que les pièces (26) munies des chapeaux (38) sont constituées par des profilés à trois ailes ou plus, au moins une des ailes comportant dans sa partie supérieure un épaulement (40) par l'intermédiaire duquel elle repose sur l'extrémité du tube (10) ou sur la plaque tubulaire supérieure (12).

4. Evaporateur selon la revendication 3, caractérisé en ce que l'extrémité inférieure des ailes des profilés (36) est taillée en biseau, le bord des ailes se terminant plus bas que la partie centrale du profilé.

5. Evaporateur selon la revendication 3 ou 4, caractérisé en ce que le profilé (36) et le chapeau (38) sont en métal et le chapeau est fixé par soudure sur l'extrémité supérieure du profilé.

6. Evaporateur selon la revendication 3 ou 4, caractérisé en ce que le profilé et le chapeau sont réalisés en une seule pièce par moulage.

7. Evaporateur selon l'une quelconque des revendications précédentes, caractérisé en ce que la face supérieure du chapeau est munie de rainures radiales (42) régulièrement disposées autour de son centre.

8. Evaporateur selon l'une quelconque des revendications précédentes, caractérisé en ce que le dispositif de répartition est constitué par au moins une nappe de barres horizontales (28), écartées les unes des autres, chaque barre étant disposée au-dessus d'une rangée de tubes (10) du faisceau.

9. Evaporateur selon la revendication 8, caractérisé en ce que le dispositif de répartition est constitué par plusieurs nappes superposées de barres horizontales (28), les barres de chaque nappe étant parallèles entre elles et l'orientation des barres de chaque nappe étant différente de celle des autres nappes.

10. Evaporateur selon l'une quelconque des revendications précédentes, caractérisé en ce que les espaces au-dessus de la plaque tubulaire supérieure (12) et au-dessous de la plaque tubulaire inférieure (14) sont divisés par des cloisons radiales (26, 45), chaque cloison inférieure (45) se trouvant dans le même plan vertical qu'une cloison supérieure (26) de façon à former dans l'évaporateur plusieurs sections pouvant fonctionner indépendamment l'une de l'autre et chaque section comporte son propre dispositif de répartition.

11. Evaporateur selon la revendication 10, caractérisé en ce que lesdites cloisons radiales (26, 45) sont parallèles aux directions d'alignement des tubes (10) du faisceau et le dispositif de répartition de chaque section de l'évaporateur est constitué par plusieurs nappes superposées de barres horizontales (28), les barres de chaque nappe étant parallèles à l'une des cloisons et l'orientation des barres de chaque nappe étant différente de celle des autres nappes.

12. Evaporateur selon la revendication 8, 9 ou 11, caractérisé en ce que les barres (28) sont supportées par une virole cylindrique (22) reposant sur la plaque tubulaire supérieure (12) et en ce que cet ensemble constitue une unité remplaçable.

13. Evaporateur selon la revendication 8, 9, 11 ou 12, caractérisé en ce que les barres (28) sont constituées par des tubes.

14. Evaporateur selon la revendication 8, 9, 11 ou 12, caractérisé en ce que les barres (28) sont constituées par des cornières disposées avec leur arête vers le haut.

15. Evaporateur selon l'une quelconque des revendications précédentes, caractérisé en ce que le dispositif de répartition comporte en outre une tubulure d'alimentation (30) à plusieurs branches et en ce que plusieurs déflecteurs coniques (32), espacés verticalement les uns des autres et percés d'une ouverture en leur centre, sont disposés sous chaque branche, leur diamètre extérieur et le diamètre de l'ouverture centrale de chaque déflecteur diminuant du déflecteur supérieur au déflecteur inférieur.

16. Evaporateur selon l'une quelconque des revendications précédentes, caractérisé en ce qu'il comporte un séparateur à action centrifuge placé dans une calandre (44) constituant la partie inférieure de l'évaporateur, et formé de deux viroles concentriques (46, 48) délimitant le long de la paroi de la calandre, deux passages circulaires concentriques (50, 52) ayant une étendue angulaire supérieure à 270°, le passage intérieur (50) communiquant avec l'espace central de la calandre par au moins une ouverture (58, 60) percée dans la virole intérieure (46) et débouchant à une extrémité du passage extérieur (52) et une tuyauterie de sortie de vapeur (64) étant raccordée à l'autre extrémité du passage extérieur.

## Claims

1. Descending flow evaporator comprising a bundle of vertical tubes, the ends of which are fixed to upper and lower tubular plates, and a liquid distribution device (28) on the upper tubular plate (12), characterized in that it comprises caps (38) placed above the tubes (10) of the cluster, clearly away from their upper ends, the said caps being mounted on the upper ends of parts (36) the lower portion of which is introduced into the tubes of the cluster, and the cross-section of the parts being small as compared to the internal cross-section of the tubes.

2. Evaporator in accordance with claim 1, characterized in that the upper portion of the said parts (36) rests on the ends of the tubes (10) or on the upper tubular plate (12).

3. Evaporator in accordance with claim 2, characterized in that parts (36) provided with caps (38) are constituted by three or more winged, sectional bars, at least one wing of each comprising, at its upper portion, a shoulder (40) by means of which it rests on the end of the tube (10) or on the upper tubular plate (12).

4. Evaporator in accordance with claim 3, characterized in that the lower end of the wings of the sectional bars (36) is chamfered, the edge of the wings ending lower than the central portion of the section (8).

5. Evaporator in accordance with claim 3 or 4, characterized in that the sectional bar (36) and the cap (38) are made of metal and the cap is fixed on the upper end of the sectional bar by welding.

6. Evaporator in accordance with claim 3 or 4, characterized in that the sectional bar and the cap are made integral by moulding.

7. Evaporator in accordance with any one of the preceding claims, characterized in that the upper face of each cap is provided with radial grooves regularly arranged around its centre.

8. Evaporator in accordance with any one of the preceding claims, characterized in that the distribution device is constituted by at least one layer horizontal bars (28) spaced from each other, each bar being arranged above a row of tubes (10) of the bundle.

9. Evaporator in accordance with claim 8, characterized in that the distribution device is constituted by several superposed layers of horizontal bars (28), the bars of each layer being parallel to each other and the orientation of the bars of each layer being different from that of the bars of the other layers.

10. Evaporator in accordance with any one of the preceding claims, characterized in that the spaces above the upper tubular plate (12) and below the lower tubular plate (14) are divided by radial partitions (26, 45), each lower partition (45) being situated within the same vertical plane as an upper partition (26) so as to form, within the evaporator, several sections capable of functioning separately from one another and each section comprising its own distribution device.

11. Evaporator in accordance with claim 10, characterized in that the said radial partitions (26, 45) are parallel to the directions of alignment of rows of the tubes (10) of the bundle and the distribution device of each section of the evaporator is constituted by several superposed layers of horizontal bars (28), the bars of each layer being parallel to one of the partitions and the orientation of the bars of each layer being different from those in the other layers.

12. Evaporator in accordance with claim 8, 9 or 11, characterized in that the bars (28) are supported by a cylindrical sleeve which rests on the upper tubular plate (12) and in that said system constitutes a replaceable unit.

13. Evaporator in accordance with claim 8, 9, 11 or 12 characterized in that the bars (28) are constituted by tubes.

14. Evaporator in accordance with claim 8, 9, 11 or 12, characterized in that the bars (28) are constituted by angle iron bars arranged so that their apex is placed upwards.

15. Evaporator in accordance with any one of the preceding claims, characterized in that the distribution device further comprises a tubular supply pipe (30) with several branches and in that several conical deflectors (32) spaced vertically from each other and provided with openings on their centres are arranged under each branch ; the outer diameter and the diameter of the central opening of each deflector decreasing from the upper deflector to the lower deflector.

16. Evaporator in accordance with any one of the preceding claims, characterized in that it includes a centrifugal separator placed in a trough (44) which constitutes the lower portion of the evaporator and which is formed by two concentric sleeves (46, 48) which define along the wall of the through two circular, concentric passages (50, 52) which have an angular extent in excess of 270°, the inner passage (50) communication with the central space of the trough by means of at least one opening (58, 60) which is provided in the inner sleeve (46) and opening at one end of the outer passage (52), and a vapour exhaust pipe (64) being connected to the other end of the outer passage.

## Patentansprüche

1. Fallstromverdampfer, bestehend aus einem Bündel von senkrechten Rohren, deren Enden an einer oberen und einer unterer Rohrplatte befestigt sind, und einer Vorrichtung (28) zur Verteilung der Flüssigkeit über die obere Rohrplatte (12), dadurch gekennzeichnet, dass er über den Bündelrohren (10) und deutlich im Abstand von derem oberem Ende angeordnete Hüte (38) aufweist, wobei die Hüte am oberen Ende von Teilen (36) aufgesetzt sind, deren unterer Teil in die Bündelrohre eingeführt ist und deren Querschnitt im Verhältnis zum Rohrinnenquerschnitt klein ist.

2. Fallstromverdampfer nach Anspruch 1, dadurch gekennzeichnet, dass der Oberteil der obenerwähnten Teile (36) auf dem Ende der

**0 029 754**

Rohre (10) oder auf der oberen Rohrplatte (12) beruht.

3. Fallstromverdampfer nach Anspruch 2, dadurch gekennzeichnet, daß die mit den Hüten (38) versehenen Teile (36) aus Profilen mit drei oder mehr Flanschen bestehen, wobei mindestens einer der Flansche in seinem oberen Teil eine Schulter (40) aufweist, über die er auf dem Ende des Rohrs (10) oder auf der oberen Rohrplatte (12) beruht.

4. Fallstromverdampfer nach Anspruch 3, dadurch gekennzeichnet, daß das untere Ende der Flansche der Profile (36) abgeschrägt ist, wobei der Rand der Flansche niedriger endet als der Mittelteil des Profils.

5. Fallstromverdampfer nach Anspruch 3 oder 4, dadurch gekennzeichnet, daß das Profil (36) und der Hut (38) aus Metall sind und der Hut mit dem oberen Ende des Profils durch Schweißung verbunden ist.

6. Fallstromverdampfer nach Anspruch 3 oder 4, dadurch gekennzeichnet, daß das Profil und der Hut in einem einzigen Stück gegossen werden.

7. Fallstromverdampfer nach irgendeinem der vorstehenden Ansprüche, dadurch gekennzeichnet, daß die obere Fläche des Hutes mit regelmäßig um ihren Mittelpunkt angeordneten Radialrillen (42) versehen ist.

8. Fallstromverdampfer nach irgendeinem der vorstehenden Ansprüche, dadurch gekennzeichnet, daß die Verteilungsvorrichtung aus mindestens einer Querreihe von waagerechten, im Abstand voneinander liegenden Stäben (28) besteht, wobei jeder Stab über einer Reihe von Bündelrohren (10) angeordnet ist.

9. Fallstromverdampfer nach Anspruch 8, dadurch gekennzeichnet, daß die Verteilungsvorrichtung aus mehreren überlagerten Querreihen von waagerechten Stäben (28) besteht, wobei die Stäbe jeder Querreihe zueinander parallel sind und die Orientierung der Stäbe jeder Querreihe anders ist als die der anderen Querreihen.

10. Fallstromverdampfer nach irgendeinem der vorstehenden Ansprüche, dadurch gekennzeichnet, daß die Räume oberhalb der oberen Rohrplatte (12) und unterhalb der unteren Rohrplatte (14) durch Radialtrennwände (26, 45) geteilt sind, wobei jede untere Trennwand (45) in der gleichen Vertikalebene wie eine obere Trennwand (26) liegt, so daß im Verdampfer mehrere Abteilungen gebildet werden, die voneinander unabhängig arbeiten können, und jede Abteilung ihre eigene Verteilungsvorrichtung besitzt.

11. Fallstromverdampfer nach Anspruch 10, dadurch gekennzeichnet, daß die Radialtrennwände (26, 45) zu den Fluchtrichtungen der Bündelrohre (10) parallel sind und die Verteilungsvorrichtung jeder Abteilung des Verdampfers aus mehreren überlagerten Querreichen von waagerechten Stäben (28) besteht, wobei die Stäbe jeder Querreihe zu einer der Trennwände parallel sind und die Orientierung der Stäbe jeder Querreihe anders ist als die der anderen Querreihen.

12. Fallstromverdampfer nach Anspruch 8, 9 oder 11, dadurch gekennzeichnet, daß die Stäbe (28) durch einen zylindrischen Mantel (22) getragen sind, der auf der oberen Rohrplatte (12) beruht, und daß diese Teile eine austauschbare Einheit bilden.

13. Fallstromverdampfer nach Anspruch 8, 9, 11 oder 12, dadurch gekennzeichnet, daß die Stäbe (28) aus Rohren bestehen.

14. Fallstromverdampfer nach Anspruch 8, 9, 11 oder 12, dadurch gekennzeichnet, daß die Stäbe (28) aus Winkeleisen mit der nach oben hin gerichteten Kante bestehen.

15. Fallstromverdampfer nach irgendeinem der vorstehenden Ansprüche, dadurch gekennzeichnet, daß die Verteilungsvorrichtung ferner einen Speisestutzen (30) mit mehreren Abzweigen aufweist, und daß mehrere konische, mit einem senkrechten Abstand voneinander liegende und in der Mitte durch eine Öffnung gebohrte Ablenkbleche (32) unter jedem Abzweig angeordnet sind, wobei der Außendurchmesser sowie der Durchmesser der mittigen Öffnung jedes Ablenkbleches vom oberen Ablenkblech zum unteren Ablenkblech abnimmt.

16. Fallstromverdampfer nach irgendeinem der vorstehenden Ansprüche, dadurch gekennzeichnet, daß er einen Zentrifugalabscheider umfaßt, der in einem den unteren Teil des Verdampfers ausmachenden Brüdenraum (44) angeordnet ist und aus zwei konzentrischen Mänteln (46, 48) besteht, die längs der Wand des Brüdenraums zwei konzentrische Ringräume (50, 52) mit einem Winkelumfang von über 270° abgrenzen, wobei der Innenringraum (50) mit dem Brüdenrauminneren durch mindestens eine im Innenmantel (46) gebohrte Öffnung (58, 60) verbunden ist und an einem Ende des Außenringraums (52) endet, und wobei eine Dampfaustrittsleitung (64) an das andere Ende des Außenringraums angeschlossen ist.

FIG. 1

## FIG.2

68

28

30

16

26

18

22

## FIG.3

50

52

66

60

62

66

45

44

46

48

66

58

64

FIG.4

38

40

12

36

10

FIG.5

38

36

FIG.6

42

↓F

Vue suivant F

42

FIG.7

3